# EUROPEAN PATENT APPLICATION

(11) **EP 0 660 548 A1**
(43) Date of publication of application: **28.06.1995**
(21) Application number: 94309011.8
(22) Date of filing: 05.12.1994
(51) Int. Cl.: H04B 10/135

(54) **Technique for improving performance in an optical transmission system**

(30) Priority: 23.12.1993 US 173327
(71) Applicant: AT&T Corp., New York, NY 10013-2412 (US)
(72) Inventor: Homsey, Glen M., Red Bank, New Jersey 07701 (US); Nyman, Bruce Mitchell, Freehold Township, New Jersey 07728 (US); Jopson, Robert Meachem, Rumson, New Jersey 07760 (US)
(74) Representative: Watts, Christopher Malcolm Kelway, Dr.

(57) **Abstract**

The effects of polarization dependent hole burning are reduced by simultaneously launching a first optical signal carrying information and having a first characteristic wavelength and a second optical signal carrying different information and having a second characteristic wavelength, where the first and second optical signals have substantially orthogonal relative polarizations, into the same transmission path as a combined optical signal. The launched optical signals have equal optical power levels. Thus, the noise associated with one optical signal cannot be preferentially enhanced with respect to the information carried by the other optical signal. Furthermore, because the combined optical signal is created by coupling two highly-polarized signals, the poor noise and dispersion characteristics normally associated with non-polarized light sources are avoided. As a result, the effects of PDHB are minimized.

## Description

### Technical Field

The invention relates to optical transmission. More particularly, this invention relates to improving the transmission capabilities of optical transmission systems.

### Background

Very long optical fiber transmission paths, such as those employed in undersea or transcontinental terrestrial lightwave transmission systems, employing optical amplifier repeaters, are subject to decreased performance due to a number of possible impairments. These systems are susceptible to signal fading and fluctuations in the signal-to-noise ratio (SNR) which are primarily caused by polarization dependent effects.

In a long optical transmission systems employing amplifiers, the SNR can fluctuate in a random manner. This fluctuation contributes to a phenomenon known as signal fading. Signal fading results in an increased bit error rate ("BER") for digital signals transmitted via the optical fiber path. When the SNR of a digital signal within such a transmission system becomes unacceptably small, resulting in an undesirably high BER, a signal fade is said to have occurred. Experimental evidence has shown that signal fading, and the underlying SNR fluctuations, are caused by a number of polarization dependent effects induced by the optical fiber itself and/or other optical components (e.g., repeaters, amplifiers, etc.) along the transmission path. In particular, one of these effects has been identified as polarization dependent hole-burning ("PDHB"). PDHB impacts signal transmission as a function of the particular state of polarization ("SOP") of an optical signal being propagated along the path.

PDHB reduces gain of optical amplifiers within the long optical transmission path for any signal having an SOP parallel to that of a polarized primary signal carried by the transmission path. However, the gain provided by these amplifiers for optical signals having an SOP orthogonal to that of the primary signal remains relatively unaffected. In simplified terms, the primary optical signal produces a dichroic saturation of the amplifier that is dependent upon the SOP of the primary optical signal. The polarized primary signal reduces the level of population inversion in a dichroic manner within the amplifier and results in a lower gain for optical signals in that SOP. This effectively causes the amplifier to preferentially enhance noise having an SOP orthogonal to the primary signal.

The use of a non-polarized light source to transmit information over an optical fiber path is one prior art method for reducing PDHB. A non-polarized light source shares its optical power equally in two orthogonal states of polarization within the fiber, with no significant phase coherence between the two. Since PDHB is polarization dependent, the non-polarized light source has the potential to reduce the deleterious effects of PDHB. Unfortunately, non-polarized light sources produce signals having inherently wide bandwidths. These wide bandwidth signals exhibit poor noise and dispersion characteristics which make them impractical for use over very long transmission paths.

### Summary

The effects of PDHB are reduced, in accordance with the principles of the invention, by simultaneously launching a first optical signal carrying information and having a first characteristic wavelength and a second optical signal carrying different information and having a second characteristic wavelength, where the first and second optical signals have substantially orthogonal relative polarizations, into the same transmission path. The launched optical signals have equal optical power levels. Since the two signals have equal power and are launched into the transmission path with substantially orthogonal polarizations, the noise associated with one signal cannot be preferentially enhanced with respect to the information carried by the other signal. As a result, the effects of PDHB are minimized.

In an illustrative embodiment of the invention, the second optical signal is a continuous-wave (CW) optical signal that is not modulated to carry information. Advantageously, the CW optical signal is combined with the first optical signal in a transmission system using a passive coupler to gain substantial improvement in transmission performance with minimal complexity.

The discussion in this Summary and the following Brief Description of the Drawings, Detailed Description, and drawings merely represents examples of this invention and is not to be considered in any way a limitation on the scope of the exclusionary rights conferred by a patent which may issue from this application. The scope of such exclusionary rights is set forth in the claims at the end of this application.

### Brief Description of the Drawing

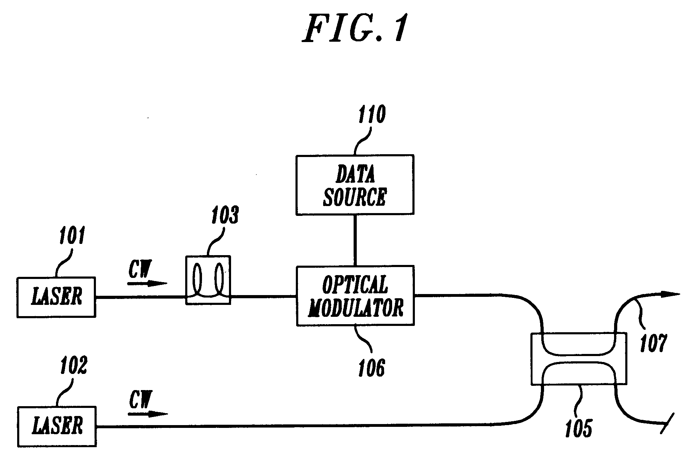

FIG. 1 is a simplified block diagram of an illustrative arrangement in accordance with the invention.

### Detailed Description

One method of reducing the effects of PDHB employs two optical signals of different wavelengths and substantially orthogonal relative polarizations that are launched into the same transmission path. In such a system, the launched signals have equal optical power levels, and are modulated to carry substantially the same information. Since the two signals are launched into the transmission path with substantially orthogonal polarizations and comparable power level, the overall transmitted signal is essentially unpolarized. Thus, PDHB may be reduced as long as the two signals remain orthogonally polarized along the optical transmission path. PDHB is satisfactorily reduced but additional equipment is needed to control the SOP of two signals. This may increase the overall complexity and cost and reduce reliability.

FIG. 1 shows a simplified block diagram of an illustrative arrangement in accordance with the invention. As shown, the arrangement includes lasers 101 and 102, polarization controller (PC) 103, optical coupler 105, optical modulator 106, and transmission path 107. It may be desirable in some applications for optical coupler 105 to be a polarization combining coupler such as a polarization beam splitter. Laser 101 produces a continuous wave (CW) optical signal having a wavelength of λ₁ and power level of P₀. Laser 102 produces a CW optical signal having a wavelength of λ₂ and power level of P₀. It will be appreciated with those with skill in the art that it may be desirable in some applications for the λ₁ and λ₂ signals to have unequal power levels.

Via separate optical fibers, the output of laser 101 is routed to PC 103, and the output of laser 102 is routed directly to coupler 105. These optical fibers could be, for example, polarization maintaining fibers that are well known in the art. PC 103 may be, for example, a Lefevre-type polarization controller, which is well-known in the art. Such controllers were described by H.C. Lefevre in IEEE Electronics Letters, Vol. 16, p. 778, 1980. PC 103 is adapted to insure that SOP of the λ₁ optical signal exiting PC 103 is substantially orthogonal to the SOP of the λ₂ optical signal. The SOP of the λ₂ optical signal is fixed because the output from laser 102 has a fixed SOP. As will be appreciated with those skill in the art, the SOP of the λ₂ optical signal could also be set using one of a number of devices, for example, a polarization-maintaining fiber, a PC, a bulk waveplate or the like.

The λ₁ optical signal exiting PC 103 is modulated to carry information by optical modulator 106 in response to signal from data source 110. An example of a type of polarization independent optical modulator which can be employed in practicing the invention is given M. Suzuki, H. Tanaka, Y. Matsushima, "InGaAsP Electroabsorption Modulator for High-Bit Rate EDFA System," IEEE Photonics Technology Letters, Vol. 4, No. 6, June 1992.

The λ₁ optical signal exiting optical modulator 106, and the λ₂ optical signal from laser 102 are fed to optical coupler 105. Optical coupler 105 serves to combine the λ₁ and λ₂ signals onto single optical fiber 107. Optical coupler 105 may be, for purposes of this example, a 3dB coupler that is well known in the art. Since the combined signal consists of two orthogonally oriented components of equal magnitude, the output from optical coupler 105 is only minimally polarized. The power level of the combined signal exiting from optical coupler 105 is approximately P₀, as a total optical power of 2P₀ was input to optical coupler 105, and there is a 3dB combining loss associated with optical coupler 105 (Pₒᵤₜ=Pᵢₙ/2).

Since the λ₁, and λ₂ components of the combined signal are orthogonally oriented, the noise associated with one component cannot be preferentially enhanced with respect to the information carried by the other component. Furthermore, because the combined signal is created by coupling two highly-polarized signals, the poor noise and dispersion characteristics normally associated with non-polarized light sources are avoided. Thus, PDHB effects in the transmission system are advantageously reduced. It will be appreciated by those with skill in the art that other polarization dependent effects, for example polarization dependent loss, are likewise reduced.

It will further be appreciated by those with skill in the art that PC 103 can be adjusted to provide the optimum launch state for the combined signal into transmission path 107 that will ensure that the SOP of each component signal remain substantially orthogonal as the combined signal propagates throughout the transmission system. Such adjustment could be made, for example, in response to a signal generated by the receiver of the transmission system that is indicative of the signal-to-noise ratio of the received signal.

It will be understood that the particular techniques described above are only illustrative of the principles of the present invention, and that various modifications could be made by those skilled in the art without departing from the scope of the present invention, which is limited only by the claims that follow. One modification would include modulating the SOP of the λ₂ optical signal at a rate that is different from the data modulation rate. Another modification would involve aligning the relative SOPs of the λ₁ and λ₂ optical signals so that one was oriented between 160° and 200° of the other, as represented on Poincarés sphere (i.e., substantial, but not exact, orthogonality with respect to one another). Another modification would involve coupling either the λ₁ or λ₂ optical signal at various points along the transmission system rather than at the point of optical signal generation as described above.

## Claims

1. A method for use in improving the transmission capabilities of optical transmission systems, comprising the steps of:
generating an unmodulated first optical signal having a first characteristic wavelength and a fixed state of polarization;
generating a second optical signal having a second characteristic wavelength and a fixed state of polarization which is substantially orthogonal to the fixed state of polarization of said first optical signal;
modulating said second optical signal; and
combining said unmodulated first optical signal and said modulated second optical signal into a single optical signal.

2. The method of claim 1 in which said first optical signal and said second optical signal have substantially equal power levels.
